# EUROPEAN PATENT APPLICATION

(11) **EP 4 727 052 A1**
(43) Date of publication of application: **15.04.2026**
(21) Application number: 24219365.4
(22) Date of filing: 12.12.2024
(51) Int. Cl.: H04L 9/08

(54) **METHOD FOR RECOVERING THRESHOLD SECRET BASED ON HYPERPLANE GEOMETRY**

(30) Priority: 11.10.2024 KR 20240138253
(71) Applicant: IUCF-HYU (Industry-University Cooperation Foundation Hanyang University), Seoul 04763 (KR)
(72) Inventor: RYU, Minsoo, 06601 Seoul (KR)
(74) Representative: Prüfer & Partner mbB Patentanwälte · Rechtsanwälte

(57) **Abstract**

A method and device for recovering threshold secret are disclosed. The disclosed method comprises: the steps of: (a) obtaining first shares generated by a first share generation structure from participants; (b) determining whether the number of the obtained first shares is greater than or equal to a first threshold value (t); (c) recovering a secret by a (t,n) threshold secret recovery method when the number of the first shares is greater than or equal to the first threshold value (t); (d) obtaining second shares generated by a second share generation structure from participants when the number of the obtained first shares is less than the first threshold value (t); and (e) recovering a secret using the obtained first shares and the obtained second shares, wherein a critical share set is determined so that the number of shares of the critical share set, which is a subset of the intersection of the first share set generated by the first share generation structure and the second share set generated by the second share generation structure, is greater than or equal to a critical threshold value (r) that is less than the first threshold value. According to the disclosed device and method, the recoverability of a secret can be improved even when a share is lost by considering the characteristics of secret sharing participants, and even in a state where secret recovery by a specific share structure is impossible due to the loss of a large number of shares, there is an advantage in that the recoverability of a secret can be improved by using another form of secret recovery method.

## Description

### CROSS-REFERENCE TO RELATED APPLICATIONS

This application claims priority under 35 U.S.C. §119(a) to Korean Patent Application No. 10-2024-0138253, filed on October 11, 2024, with the Korean Intellectual Property Office, the disclosure of which is incorporated herein in its entirety by reference.

### BACKGROUND

### 1. Technical Field

The present disclosure relates to a method and device for recovering threshold secret, and more particularly to a method and device for recovering threshold secret capable of improving the recoverability of a secret.

### 2. Description of the Related Art

Recovering threshold secret refers to a method of recovering a secret by gathering the number of shares (t shares) required for secret recovery from the shares (a total of n shares) held by multiple participants, where multiple participants store shares determined by the share structure. Here, t, the minimum number of shares required for secret recovery, corresponds to the threshold.

In 1979, Shamir proposed a secret sharing and recovery method in the journal Communications of the ACM. The threshold secret sharing method proposed by Shamir randomly selects the remaining coefficients except for the constant term used as a secret to determine a (t-1)-order polynomial, and determines n shares from n points passing through this polynomial. The (t-1)-order polynomial corresponds to the share structure, and if t shares out of n shares can be figured out, the secret corresponding to the constant term can be figured out.

This threshold secret sharing and recovery method provides perfect security. Perfect security means that no information about secret S can be found out with (t-1) or fewer shares. The secret contained in the polynomial is a constant term S, and for any point (0, S') where S'≠S, there always exists a (t-1)-order polynomial that passes through this point and (t-1) points, so the attacker cannot find out any information about S.

Meanwhile, there are also methods that use geometric properties as share structures, such as the Blakely secret sharing method presented at the 1979 International Workshop on Managing Requirements Knowledge. In the method that uses geometric properties as share structures, a lower-dimensional plane or line is used in a vector space, and the intersections of these are defined as secrets. For example, the intersection point Q of a pre-known line and a hyperplane of (t-1) dimensions can be set as a secret, and n points on the hyperplane can be used as shares. The hyperplane can be determined with t points out of the n points, and the secret can be restored by finding the intersection point Q of the determined hyperplane and the pre-known line. Alternatively, the intersections of the hyperplanes can be set as secrets, each hyperplane can be generated as a share, and the secret can be recovered from the t hyperplanes.

This (t,n) threshold secret recovery method can increase the security of the secret because the secret can be discovered only if the attacker steals more than t shares out of n shares. In addition, even if some of the participants who are keeping the shares lose their shares, the secret can be recovered at any time as long as more than t shares are maintained.

However, since it is impossible to restore the secret if more than (n-t) shares are lost, participants need to pay special attention not to lose shares. However, if the number of shares (n) is increased or the number of critical shares (t) is decreased to prevent the secret from being impossible to recover, the possibility that an attacker will find out the secret also increases, so a trade-off problem occurs.

### SUMMARY OF THE INVENTION

Embodiments of the present disclosure propose a method for recovering threshold secret that can improve the recoverability of a secret even when a share is lost, considering the characteristics of secret sharing participants.

In addition, embodiments of the present disclosure propose a method for recovering threshold secret that can improve the recoverability of a secret by using another type of secret recovery method even when secret recovery by a specific share structure is impossible due to the loss of a large number of shares.

According to one aspect of the present disclosure, a method for recovering threshold secret is provided, the method comprising the steps of: (a) obtaining first shares generated by a first share generation structure from participants; (b) determining whether the number of the obtained first shares is greater than or equal to a first threshold value (t); (c) recovering a secret by a (t,n) threshold secret recovery method when the number of the first shares is greater than or equal to the first threshold value (t); (d) obtaining second shares generated by a second share generation structure from participants when the number of the obtained first shares is less than the first threshold value (t); and (e) recovering a secret using the obtained first shares and the obtained second shares, wherein a critical share set is determined so that the number of shares of the critical share set, which is a subset of the intersection of the first share set generated by the first share generation structure and the second share set generated by the second share generation structure, is greater than or equal to a critical threshold value (r) that is less than the first threshold value.

The first threshold value (t) for secret recovery of the first share generation structure is set to be larger than the number of participants who are likely to betray among the participants to whom the first shares have been assigned.

A duplication share set is determined, which is a subset of the intersection of the first share set generated by the first share generation structure and the second share set generated by the second share generation structure, and the intersection of the duplication share set and the critical share set is an empty set, and the union of the duplication share set and the critical share set is the intersection of the first share set and the second share set.

The second share set includes the critical share set, the duplication share set, and an additional share set determined by the second share generation structure.

The duplication share set and the additional share set are assigned to participants with a low probability of loss.

The number of intersections between the set of shares assigned to the participants who are likely to betray and the critical share set is set to be less than the critical threshold value (r).

The second share generation structure is determined to have a different structure from the first share generation structure by using the critical share set and the duplication share set included in the first share.

If all shares of the first share set belong to the union of the critical share set and the duplication share set, the second share generation structure is determined in the same way as the first share generation structure.

The second threshold value of the second share generation structure is set to be greater than or equal to the number of elements of the union of the critical share set and the duplication share set.

According to another aspect of the present disclosure, a device for recovering threshold secret is provided, the device comprising: a processor; and at least one memory connected to the processor, the processor executing the steps of: (a) obtaining first shares generated by a first share generation structure from participants; (b) determining whether the number of the obtained first shares is greater than or equal to a first threshold value (t); (c) recovering a secret by a (t,n) threshold secret recovery method when the number of the first shares is greater than or equal to the first threshold value (t); (d) obtaining second shares generated by a second share generation structure from participants when the number of the obtained first shares is less than the first threshold value (t); and (e) recovering a secret using the obtained first shares and the obtained second shares, wherein a critical share set is determined so that the number of shares of the critical share set, which is a subset of the intersection of the first share set generated by the first share generation structure and the second share set generated by the second share generation structure, is greater than or equal to a critical threshold value (r) that is less than the first threshold value.

The present disclosure has the advantage of being able to improve the recoverability of secrets even when shares are lost by considering the characteristics of secret sharing participants.

In addition, the present disclosure has the advantage of being able to improve the recoverability of secrets by using other types of secret recovery methods even in a situation where secret recovery by a specific share structure is impossible due to the loss of a large number of shares.

### BRIEF DESCRIPTION OF THE DRAWINGS

FIG. 1 is a block diagram showing the structure of a threshold secret recovery device according to one embodiment of the present disclosure.
FIG. 2 is a diagram showing an example of determining a share using a polynomial share generation structure.
FIG. 3 is a flowchart showing the overall flow of a share generation structure and a share generation method for secret recovery according to one embodiment of the present disclosure.
FIG. 4 is a diagram showing an example of share sets generated according to one embodiment of the present disclosure.
FIG. 5 is a table showing the tendencies of participants according to one embodiment of the present disclosure.
FIG. 6 is a diagram showing share sets for threshold secret sharing to be explained later.
FIG. 7 is a flowchart showing the overall flow of a threshold secret recovery method according to one embodiment of the present disclosure.

### DETAILED DESCRIPTION OF THE INVENTION

Hereinafter, specific embodiments according to the embodiments of the present disclosure will be described with reference to the drawings. The following detailed description is provided to assist in a comprehensive understanding of the methods, devices and/or systems described herein. However, this is only an example and the present invention is not limited thereto.

In describing the embodiments, when it is determined that detailed descriptions of known technology related to the present disclosure may unnecessarily obscure the gist of the present disclosure, the detailed descriptions thereof will be omitted. The terms used below are defined in consideration of functions in the present disclosure, but may be changed depending on the customary practice or the intention of a user or operator. Thus, the definitions should be determined based on the overall content of the present specification. The terms used herein are only for describing the embodiments, and should not be construed as limitative. Unless the context clearly indicates otherwise, the singular forms are intended to include the plural forms as well. It should be understood that the terms "comprises," "comprising," "includes," and "including," when used herein, specify the presence of stated features, numerals, steps, operations, elements, or combinations thereof, but do not preclude the presence or addition of one or more other features, numerals, steps, operations, elements, or combinations thereof.

Before explaining the configuration of the present disclosure in detail, the present disclosure is a method that improves the existing threshold secret recovery method, the (t, n) recovery method, and in this embodiment, the threshold secret recovery method of the present disclosure is defined as the (t, (r, S_{c}), n) recovery method. The threshold secret recovery method of the present disclosure can be defined in a way that allows participants to share shares using a plurality of share generation structures, and for the share sharing through such a plurality of share generation structures, in addition to t (the threshold value of the number of shares for secret recovery) and n (the number of shares), r and S_{c} are additionally defined and used for secret recovery. The definitions of r and S_{c} and the specific threshold secret recovery method of the present disclosure will be described in detail below with reference to the drawings.

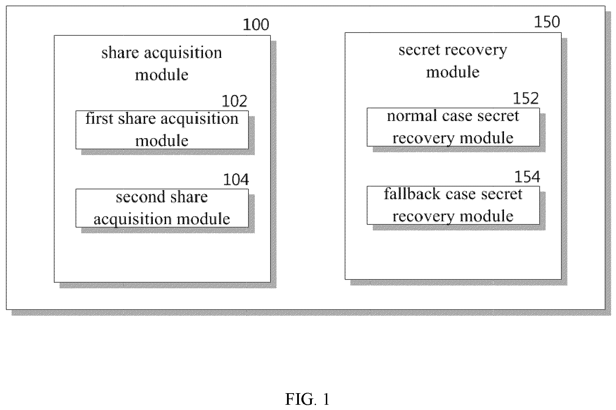

FIG. 1 is a block diagram showing the structure of a threshold secret recovery device according to one embodiment of the present disclosure.

Referring to FIG. 1, a threshold secret recovery device according to one embodiment of the present disclosure includes a share acquisition module 100 and a secret recovery module 150. The threshold secret recovery device of the present disclosure may include various types of computing devices. For example, the threshold secret recovery device of the present disclosure may be one of the terminal devices storing the share, or may be a separate server device for secret recovery.

The share acquisition module 100 has the function of acquiring shares 100 from terminals of multiple participants for secret recovery. In order to recover a secret, it is necessary to acquire shares that are distributed and stored in multiple participant terminals, and the share acquisition module 100 is a module that performs this function.

According to a preferred embodiment of the present disclosure, the share acquisition module 100 includes a first share acquisition module 102 and a second share acquisition module 104. In the traditional threshold secret recovery method, (t,n) threshold secret sharing and recovery, a single share generation structure is used, and shares are generated from the single share generation structure. However, in the present disclosure, multiple share generation structures are used, and in this embodiment, a case where two share generation structures are used is described as an example.

The first share acquisition module 102 has a function of acquiring the first shares determined from the first share generation structure from the participant terminals storing the shares. Here, various types of known share generation structures can be used as the first share generation structure. For example, a high-order polynomial such as the Shamir method can be used as the first share generation structure. Of course, a geometric structure may also be used as the first share generation structure.

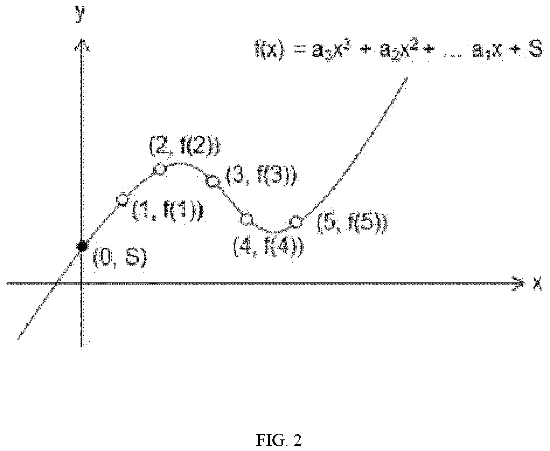

FIG. 2 is a diagram showing an example of determining a share using a polynomial share generation structure.

Referring to FIG. 2, a third-degree polynomial graph is illustrated. In the illustrated third-degree polynomial graph, the secret is a constant term S, which is the y-intercept in the illustrated graph. Since it is a third-degree polynomial, at least 4 shares are required to acquire the secret S, and t can be defined as 4. The number of shares, n, is arbitrarily determined to be greater than t, and FIG. 2 illustrates a case where the total number of shares is 5. Ultimately, the threshold secret sharing structure illustrated in FIG. 2 is a (4,5) secret sharing structure.

In addition, in FIG. 2, the total shares are (1, f(1)), (2, f(2)), (3, f(3)), (4, f(4)), (5, f(5)).

For example, if the polynomial illustrated in FIG. 2 is the first share generation structure, the shares determined from the first share generation structure are distributed and stored in the terminals of multiple participants. For example, (1, f(1)) is stored in the terminal of the first participant, and (2, f(2)) is stored in the terminal of the second participant.

The first share acquisition module 102 has the function of acquiring shares of the first share generation structure that are distributed and stored in the terminals of multiple participants for secret recovery.

The second share acquisition module 104 is a module that acquires shares generated through the second share generation structure. The shares of the second share generation structure acquired by the second share acquisition module 104 are used in cases where secret recovery is impossible with only the shares of the first share generation structure.

As explained above, the present disclosure improves secret recoverability by using a second share generation structure, which is another share generation structure, in addition to the first share generation structure. Hereinafter, the second share generation structure and the method of generating shares of the second share generation structure will be examined first, and then the description of FIG. 1 will be continued.

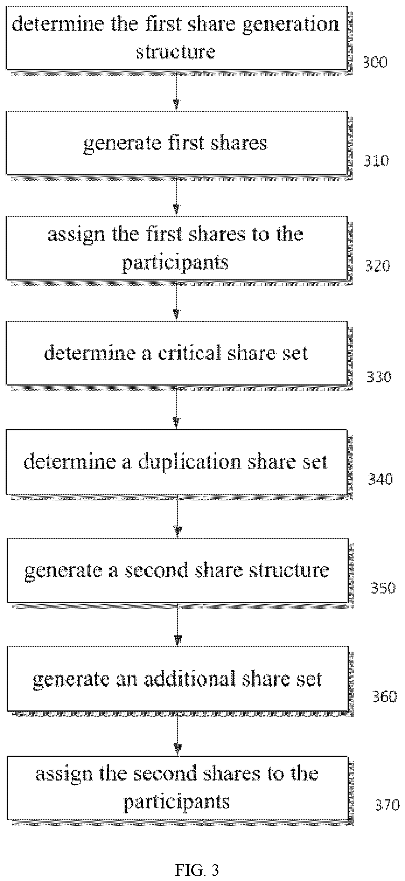

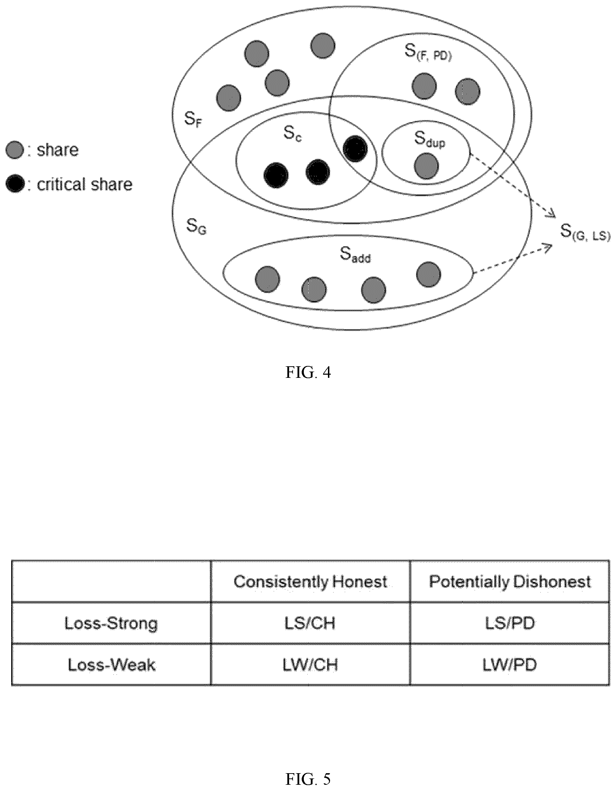

FIG. 3 is a flowchart showing the overall flow of a share generation structure and a share generation method for secret recovery according to one embodiment of the present disclosure, and FIG. 4 is a diagram showing an example of share sets generated according to one embodiment of the present disclosure.

Referring to FIG. 3, first, the first share generation structure is determined (step 300). The first share generation structure can be determined arbitrarily, and as described above, a polynomial share generation structure may be used, or a share generation structure using a geometrical structure may also be used. The user sets the share number threshold value (t) and the total share number (n) of the share generation structure, and the corresponding share generation structure is arbitrarily determined. For example, if the user sets the threshold value t to 4, a third-degree polynomial first share generation structure can be generated.

When the first share generation structure is generated, first shares are generated from the first share generation structure (step 310). The number of shares of the first share generation structure, n, is arbitrarily set to be greater than t, and when the first share generation structure is a polynomial, n random x-coordinates are determined to generate n first shares consisting of (x, y).

When the first shares of the first share generation structure are generated, the generated first shares are assigned to the terminals of the participants so that the first shares are distributed and stored on the terminals of the participants (step 320).

The procedure from step 300 to step 320 may be the same as the method of generating shares and assigning them to the terminals of the participants in the existing (t,n) threshold secret sharing. However, in the present disclosure, shares may be assigned to the participants by considering the tendencies of the participants.

FIG. 5 is a table showing the tendencies of participants according to one embodiment of the present disclosure.

Referring to FIG. 5, the tendencies of the participants may be classified into LS/CH (Loss-Strong and Consistently Honest), LW/AH (Loss-Weak and Consistently Honest), LS/PD (Loss-Strong and Potentially Dishonest), and LW/PD (Loss-Weak and Potentially Dishonest).

If there are LS/CH participants who are honest and have a low probability of losing shares, the shares can be assigned only to LS/CH participants, thereby reducing the possibility of losing or leaking secrets. However, if there are no LS/CH participants and only the remaining types of participants exist, managing secrets securely becomes a complex problem. Even if there are LS/CH type participants, if their accessibility is poor, it may not be desirable to assign shares only to such participants depending on the secret sharing application.

In particular, it is desirable to set constraints when assigning shares to PD type participants that are likely to betray.

Referring to FIG. 4, the first share generation structure is S_{F}, and a case in which a total of 10 first shares are generated from the first share generation structure S_{F} is illustrated.

In FIG. 4, there are 4 participants of the PD type with a high probability of betrayal. In this case, the number of critical shares, t, must be set to be larger than the number of users of the PD type with a high probability of betrayal among the participants of the first share generation structure. In short, the number of shares included in S_{(F, PD)} must be smaller than t.

Once the generation of the first shares is completed, a critical share set is determined among the first shares (step 330). The critical share set is a subset that belongs to the first share generation structure S_{F} and is also a subset that belongs to the second share generation structure S_{G} (a subset of the intersection of the share set of the first share generation structure and the share set of the second share generation structure), and is a share set required to recover the secret in an exceptional situation (Fallback Case).

In this embodiment, the critical share set is defined as S_{c}, and the number of shares belonging to the critical share set is determined based on r. In this embodiment, r is defined as a critical threshold value, and r must be set to be smaller than t, and even when the number of shares of the first share generation structure is less than t, it operates so that secret recovery is possible using r critical shares. The number of shares belonging to the critical share set is set to be greater than or equal to r. In short, Sc is specified to satisfy |S_{c}| ≥ r. r can also be defined as the minimum number of shares required to recover the secret through the second share generation structure when secret recovery is impossible from the shares of the first share generation structure. Meanwhile, when determining the critical share set S_{c}, the number of intersections between the share set S_{(F,PD)} of participants with a high probability of betraying and the critical share set S_{c} is determined to be less than r. If S_{c} ∩ S_{(F, PD)} includes more than r shares, it is desirable to determine the number of intersections between the share set S_{(F,PD)} of participants with a high probability of betraying and the critical share set S_{c} to be less than r, since the participants of the PD type with a high probability of betraying can recover the secret using only the shares assigned to them.

Referring to FIG. 4, a critical share set Sc, which is a subset of the intersection of the shares of the first share generation structure and the shares of the second share generation structure, is illustrated, and the number of Sc is set to 3. In this case, r can be 2 or 3. Meanwhile, referring to FIG. 3, the intersection of the critical share set and the share set with a high probability of betrayal is set to 1, which is smaller than r.

Once the critical share set is determined, a duplication share set S_{dup} that is a subset of the intersection of the shares of the first share generation structure S_{F} and the shares of the second share generation structure S_{G} and does not overlap with the critical share set Sc is determined (step 340). The union of the duplication share set S_{dup} and the critical share set Sc can be defined as the intersection of the first share set of the first share generation structure and the second share set of the second share generation structure. According to a preferred embodiment of the present disclosure, it is preferable that the shares of the duplication share set and the critical share set are assigned to participants of the LS type with a low possibility of loss.

Once the critical share set and the duplication share set are determined, a second share generation structure that can have the shares of the critical share set and the shares of the duplication share set as shares is generated (step 350). The second share generation structure must be different from the first share generation structure and must be able to have the shares of the critical share set and the shares of the duplication share set as shares. The use of a share generation structure different from the first share generation structure as the second share generation structure is to prevent other shares that do not belong to S_{c} U S_{dup} from being used to recover the secret.

The threshold value and the number of shares must also be determined for the second share generation structure. The threshold value of the second share generation structure must be equal to or greater than |S_{c} ∪ S_{dup}|, which is the intersection of the shares of the first share generation structure and the second generation structure. According to one embodiment of the present disclosure, the threshold value of the second generation structure can be determined using the threshold value adjustment constant α. For example, the threshold value of the second share generation structure can be set to (r + |Sdup| + α), and the threshold value adjustment constant α is appropriately selected so that the threshold value of the second share generation structure is a different threshold value from that of the first share generation structure.

In addition, the number of shares of the second share generation structure can be determined using the share number adjustment constant δ. The number of shares of the second share generation structure is set to be larger than the threshold value of the second generation structure, and can be set to (|S_{c}| + |S_{dup}| + α + δ).

If the second share generation structure is a polynomial, the degree of the polynomial is set to be 1 less than the threshold value of the determined second share generation structure.

Even if the threshold value of the second share generation structure is determined, the shares (S_{c} ∪ S_{dup}) shared with the first share generation structure may not be enough to uniquely determine the second share generation structure. In this case, the remaining elements for determining the second share generation structure (e.g., coefficients of a polynomial, points passing through a polynomial, points on a hyperplane, or coefficients of a hyperplane equation) may be randomly selected to determine the second share generation structure.

Meanwhile, if all elements of the first share generation structure belong to the duplication share set S_{dup} or the critical share set S_{c}, i.e., if the first share generation structure S_{F} = S_{c} ∪ S_{dup}, a second share generation structure is generated that can generate all shares of S_{c} ∪ S_{dup} while having a threshold value greater than |S_{c} ∪ S_{dup}|. In this case, the second share generation structure does not have to satisfy the condition that it must be different from the first share generation structure.

Once the second share generation structure is determined in this way, an additional share set S_{add} belonging to the second generation structure is determined (step 360). The number of additional shares belonging to the additional share set may be determined based on the total number of shares of the second generation structure. If the second share generation structure is polynomial, additional points may be arbitrarily designated to determine the shares belonging to the additional share set.

Once the additional share set S_{add} is determined, the shares of the second share generation structure are assigned to the participants (step 370). Since the shares S_{c} and S_{dup}, which are shared with the first share generation structure, have already been assigned to specific participants, assignment is made only for the shares belonging to the additional share set S_{add}. According to a preferred embodiment of the present disclosure, the shares belonging to the additional share set S_{add} are assigned to participants with LS tendencies who have a low possibility of losing shares.

As examined above, the first share generation structure, the second share generation structure, the shares belonging to the first share generation structure, the shares belonging to the second share generation structure, and the shares shared by the first share generation structure and the second share generation structure are determined in the same manner as in FIG. 3.

Referring back to FIG. 1, the second share acquisition module 104 acquires shares belonging to the second share generation structure. The second share acquisition module 104 is activated and operates only when the secret cannot be recovered from the first shares of the first share generation structure. The second share acquisition module 104 acquires second shares from terminals of participants storing shares designated from the second share generation structure.

The secret recovery module 150 recovers the secret using the shares acquired by the share acquisition module 100. The secret recovery module 150 includes a normal case secret recovery module 152 and a fallback case secret recovery module 154.

The normal case secret recovery module 152 recovers the secret by the (t,n) secret recovery method when the secret recovery is possible only with the shares of the first share generation structure. The normal case secret recovery module 152 recovers the secret by the (t,n) secret recovery method when the shares of the first share generation structure that are greater than or equal to the threshold value t can be acquired.

The fallback case secret recovery module 154 has a function of recovering a secret when normal secret recovery is impossible due to the loss of shares of the first share generation structure. The fallback case secret recovery module 154 recovers a secret by aggregating r shares among the shares belonging to the critical share set Sc, (|S_{dup}| + α) shares among the shares belonging to the duplication share set and the shares S_{add} belonging to the additional share set. The total number of aggregated shares is (r + ISdupl + α), which is the minimum number of shares required to recover a secret in the threshold secret sharing of (r + |S_{dup}| + α, |S_{c}| + |S_{dup}| + α + δ).

Hereinafter, the threshold secret recovery method of the present disclosure will be examined by way of an example using a share generation structure by a polynomial according to Shamir's method.

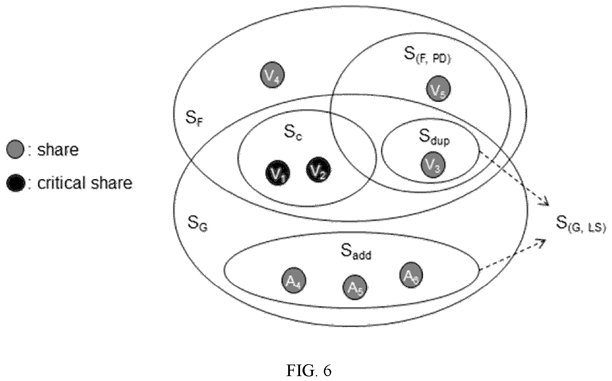

FIG. 6 is a diagram showing share sets for threshold secret sharing to be explained later.

Assume secret S = 3, and assume that LW/CH type participants X1, X2, X3, LW/PD type participants Y4, Y5, LS/PD type participants Y6 participate in (t, (r, Sc), n) threshold secret sharing and recovery. In this case, the parameters are assumed to be t = 3, r = 1, n = 5, and the (3, (1, Sc), 5) threshold secret recovery method is explained.

First, the first share generation structure is generated in the first place. Since t=3, the first generation structure becomes a second-degree polynomial with a constant value (secret) of 3. The other coefficients of the second-degree polynomial are arbitrarily or randomly designated, and the first share generation structure is assumed to be f(x) = x² + 9x + 3.

Since n=5, a total of 5 first shares are acquired. The 5 first shares are defined as V1, V2, V3, V4, and V5. In short, the first share set S_{F} according to the first share generation structure is S_{F} = {V1, V2, V3, V4, V5}.

The shares are assigned so that the number of shares of S_{(F, PD)} is less than t. To satisfy this, V1, V2, V3, V4, and V5 are assigned to X1, X2, Y4, X3, and Y5, respectively. In this case, S_{(F, PD)} = {V3, V5}. Meanwhile, the critical share set Sc to be used for secret recovery in the fallback case is designated, and for example, it is designated as Sc = {V1, V2}. The number of critical share sets must be greater than r, and |S_{c}| = 2 and r=1.

Next, a duplication share set is designated, and it is designated as S_{dup} = {V3}. Since S_{dup} must be assigned to participants of the LS type, it is assigned to Y4.

Once the critical share set and the duplication share set are designated, the second share generation structure is determined. The second share generation structure is also explained using a polynomial case as an example. The threshold value of the second share generation structure is set to (r + |S_{dup}| + α), and when the second share generation structure is a polynomial, its degree is set to (r + |S_{dup}| + α-1), and α = 3 is selected so that the degree of the polynomial of the second share generation structure is set to 4.

The second share generation structure must be a share generation structure that can generate shares {V1, V2, V3} belonging to S_{c} U S_{dup}, so the second share generation structure is a 4th-degree polynomial passing through three points V1, V2, and V3. Using three points V1, V2, and V3 and a randomly generated value 1 as the coefficient of the highest term, the second share generation structure g(x) = x⁴ + x³ + 4x² + 4x + 3 can be obtained.

Once the second share generation structure is generated, the additional share set S_{add} is determined using the second share generation structure. The number of S_{add} is determined by (α + δ), and if δ = 0 is selected, |S_{add}| = 3. Three different points (4, g(4)), (5, g(5)), (6, g(6)) passing through the second share generation structure gx) are selected to define additional shares A4, A5, and A6. The additional shares are assigned to the LS/PD type participant Y6, which has a low probability of loss.

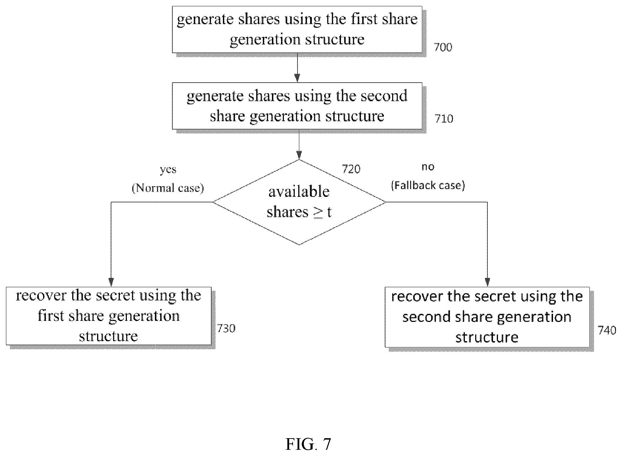

FIG. 7 is a flowchart showing the overall flow of a threshold secret recovery method according to one embodiment of the present disclosure.

Referring to FIG. 7, shares are generated using the first share generation structure (step 700). As described above, the first shares are generated based on the threshold value t and the number of shares n.

Once the first shares are generated, second shares are generated using the second share generation structure (step 710). As described above, some of the second shares overlap with the first shares, and additional shares are generated after the second share generation structure is determined.

It is determined whether the number of available shares in the first share generation structure is greater than the threshold value t (step 720).

If the number of available shares in the first share generation structure is greater than the threshold value t, the secret is recovered using only the first shares of the first share generation structure (step 730).

If the available shares in the first share generation structure are less than the threshold value t, the secret is recovered using the additional share set, the critical share set, and the duplication share set of the second generation structure (step 730). When recovering the secret using the additional share set of the second generation structure, the shares that remain without being lost are selected from the additional share set, the critical share set, and the duplication share set to recover the secret (step 740).

Meanwhile, a computing device performing the threshold secret recovery method of the present disclosure may include a processor and a memory, and the processor may perform the method of the present disclosure by executing one or more programs stored in a computer-readable storage medium.

The present disclosure has been described with reference to the embodiments illustrated in the drawings, but these are merely exemplary, and those skilled in the art will understand that various modifications and other equivalent embodiments are possible from this. Therefore, the true technical protection scope of the present disclosure should be determined by the technical spirit set forth in the appended scope of claims.

## Claims

1. A method for recovering threshold secret, the method comprising the steps of:
(a) obtaining first shares generated by a first share generation structure from participants;
(b) determining whether the number of the obtained first shares is greater than or equal to a first threshold value (t);
(c) recovering a secret by a (t,n) threshold secret recovery method when the number of the first shares is greater than or equal to the first threshold value (t);
(d) obtaining second shares generated by a second share generation structure from participants when the number of the obtained first shares is less than the first threshold value (t); and
(e) recovering a secret using the obtained first shares and the obtained second shares,
wherein a critical share set is determined so that the number of shares of the critical share set, which is a subset of the intersection of the first share set generated by the first share generation structure and the second share set generated by the second share generation structure, is greater than or equal to a critical threshold value (r) that is less than the first threshold value.

2. The method for recovering threshold secret according to claim 1,
wherein the first threshold value (t) for secret recovery of the first share generation structure is set to be larger than the number of participants who are likely to betray among the participants to whom the first shares have been assigned.

3. The method for recovering threshold secret according to claim 1 or 2,
wherein a duplication share set is determined, which is a subset of the intersection of the first share set generated by the first share generation structure and the second share set generated by the second share generation structure, and the intersection of the duplication share set and the critical share set is an empty set, and the union of the duplication share set and the critical share set is the intersection of the first share set and the second share set.

4. The method for recovering threshold secret according to claim 3,
wherein the second share set includes the critical share set, the duplication share set, and an additional share set determined by the second share generation structure.

5. The method for recovering threshold secret according to claim 4,
wherein the duplication share set and the additional share set are assigned to participants with a low probability of loss.

6. The method for recovering threshold secret according to one of claims 2 to 5,
wherein the number of intersections between the set of shares assigned to the participants who are likely to betray and the critical share set is set to be less than the critical threshold value (r).

7. The method for recovering threshold secret according to one of claims 3 to 6,
wherein the second share generation structure is determined to have a different structure from the first share generation structure by using the critical share set and the duplication share set included in the first share.

8. The method for recovering threshold secret according to one of claims 3 to 7,
wherein, when all shares of the first share set belong to the union of the critical share set and the duplication share set, the second share generation structure is determined in the same way as the first share generation structure.

9. The method for recovering threshold secret according to one of claims 3 to 8,
wherein the second threshold value of the second share generation structure is set to be greater than or equal to the number of elements of the union of the critical share set and the duplication share set.
